(19) Europäisches Patentamt
European Patent Office
Office européen des brevets

(11) **EP 3 121 674 A1**

(12) **EUROPÄISCHE PATENTANMELDUNG**

(43) Veröffentlichungstag:
**25.01.2017 Patentblatt 2017/04**

(51) Int Cl.:
***G05B 23/02*** *(2006.01)*

(21) Anmeldenummer: **16180112.1**

(22) Anmeldetag: **19.07.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **20.07.2015 DE 102015213581**

(71) Anmelder: **Siemens Aktiengesellschaft 80333 München (DE)**

(72) Erfinder: **Zeller, Marc 81243 München (DE)**

(54) **VERFAHREN ZUR MODELLIERUNG EINES KOMPONENTENFEHLERBAUMS UND COMPUTERPROGRAMMPRODUKT**

(57) Bei dem Verfahren zur Modellierung eines Komponentenfehlerbaums für mindestens eine Komponente eines Systems wird der Komponentenfehlerbaum signalflussaufwärts mit einem bekannten eingangsseitigen sowie signalflussabwärts mit einem bekannten ausgangsseitigen Komponentenfehlerbaum verknüpft, wobei ein oder mehrere Ausgangsfehlermodi des eingangsseitigen Komponentenfehlerbaums als Eingangsfehlermodi der Komponente herangezogen werden sowie ein oder mehrere Eingangsfehlermodi des ausgangsseitigen Komponentenfehlerbaums als Ausgangsfehlermodi der Komponente herangezogen werden.

Das Computerprogrammprodukt ist ausgebildet, als Eingangsdaten einen Fehlerbaum eines mehrkomponentigen Sytems mit zumindest einer Komponente mit einem unvollständig modellierten Komponentenfehlerbaum entgegenzunehmen und ein Verfahren nach einem der vorstehenden Ansprüche zur Modellierung zumindest dieses Komponentenfehlerbaums durchzuführen und vorzugsweise bereitzustellen.

## FIG 2

**Beschreibung**

Die Erfindung betrifft ein Verfahren zur Modellierung eines Komponentenfehlerbaums für mindestens eine Komponente eines Systems sowie ein Computerprogrammprodukt.

Die Entwicklung und Prüfung von Sicherheitsanalysemodellen eines Systems ist bereits in frühen Stadien der Entwicklung des Systems, insbesondere im Falle von sicherheitskritischen Systemen, äußerst wichtig. Solche Sicherheitsanalysemodelle sollen Schwachstellen oder Unzulänglichkeiten der Systemarchitektur, soweit sie die Sicherheit des Systems betreffen, identifizieren und abbilden.

Relevant sind Sicherheitsanalysemodelle insbesondere im gegenwärtig stark wachsenden Bereich der sogenannten cyber-physischen Systeme (engl. "*Cyber-Physical Systems*" (CPS)), welche gleich einem modularen Baukastensystem ursprünglich isolierte eingebettete Systeme in ein anpassbares heterogenes System einfügen. Denn gerade eingebettete Systeme sind häufig sicherheitskritisch. Solche eingebetteten Systeme finden sich insbesondere in der Industrie-Automation, in medizinischen Geräten oder im Mobility-Bereich, etwa bei Transportsystemen.

Es ist bekannt, für modulare Systeme, welche mehrere Systemkomponenten aufweisen, Komponentenfehlerbäume für die einzelnen Komponenten des Systems zu modellieren und in der Entwicklung solcher modularen Systeme zu berücksichtigen.

Problematisch hieran ist jedoch, dass in Einzelfällen während der Systementwicklung für einzelne Komponenten eines solchen Systems keine Fehlerbäume bekannt sind. In solchen Fällen muss entweder die Entwicklung von Komponentenfehlerbäumen abgewartet werden - was die Systementwicklung bremst - oder aber im Extremfall kommt die Sicherheitsanalyse zu spät, sodass ein Systementwicklungsprojekt in einem späten Stadium an Sicherheitserfordernissen scheitert.

Es ist daher Aufgabe der Erfindung, ein verbessertes Verfahren zur Modellierung eines Komponentenfehlerbaums für mindestens eine Komponente eines Systems anzugeben, welches insbesondere leicht automatisierbar ist und vorzugsweise keine detaillierte Sicherheitsanalyse der Komponente des Systems erfordert. Es ist ferner Aufgabe der Erfindung, ein Computerprogrammprodukt anzugeben, welches eine Durchführung eines solchen Verfahrens ermöglicht. Zudem soll ein Verfahren zur Entwicklung und/oder Anpassung eines technischen Systems angegeben werden.

Diese Aufgabe der Erfindung wird mit einem Verfahren zur Modellierung eines Komponentenfehlerbaums für mindestens eine Komponente eines Systems mit den in Anspruch 1 angegebenen Merkmalen sowie mit einem Computerprogrammprodukt mit den in Anspruch 10 angegebenen Merkmalen und mit einem Verfahren zur Entwicklung oder Anpassung eines technischen Systems mit den in Anspruch 12 angegebenen Merkmalen gelöst. Bevorzugte Weiterbildungen der Erfindung ergeben sich aus den zugehörigen Unteransprüchen, der nachfolgenden Beschreibung und der Zeichnung.

Das erfindungsgemäße Verfahren dient zur Modellierung eines Komponentenfehlerbaums für mindestens eine Komponente eines Systems. Bei dem erfindungsgemäßen Verfahren wird der Komponentenfehlerbaum signalflussaufwärts mit einem bekannten eingangsseitigen Komponentenfehlerbaum sowie signalflussabwärts mit einem bekannten ausgangsseitigen Komponentenfehlerbaum verknüpft, wobei ein oder mehrere Ausgangsfehlermodi des eingangsseitigen Komponentenfehlerbaums als Eingangsfehlermodi der Komponente herangezogen werden sowie ein oder mehrere Eingangsfehlermodi des ausgangsseitigen Komponentenfehlerbaums als Ausgangsfehlermodi der Komponente herangezogen werden.

Vorteilhaft ist unter dem System, für dessen mindestens eine Komponente das erfindungsgemäße Verfahren zur Modellierung eines Komponentenfehlerbaums durchgeführt wird, im Rahmen dieser Anmeldung stets ein technisches System zu verstehen, insbesondere ein cyber-physisches System (engl. "*cyber-physical System*" (CPS)).

Unter einem eingangsseitigen Komponentenfehlerbaum bezüglich der jeweils betrachteten Komponente ist im Rahmen dieser Anmeldung ein Komponentenfehlerbaum zu verstehen, welcher einer solchen Komponente zugeordnet ist, welche der betrachteten Komponente ein oder mehrere Signale übermittelt, also signalflussaufwärts mit der betrachteten Komponente verknüpft ist. Folglich propagieren auch Fehler vom eingangsseitigen Komponentenfehlerbaum zum erfindungsgemäß modellierten Komponentenfehlerbaum.

Unter einem ausgangsseitigen Komponentenfehlerbaum bezüglich der jeweils betrachteten Komponente ist ein Komponentenfehlerbaum zu verstehen, welcher einer solchen Komponente zugeordnet ist, welche von der betrachteten Komponente ein oder mehrere Signale empfängt, also signalflussabwärts mit der betrachteten Komponente verknüpft ist. Folglich propagieren auch Fehler vom erfindungsgemäß modellierten Komponentenfehlerbaum zum ausgangsseitigen Komponentenfehlerbaum.

Es versteht sich, dass signalflussaufwärts und signalflussabwärts jeweils eine Komponente mit solchen Komponentenfehlerbäumen zur Verfügung stehen muss, damit das erfindungsgemäße Verfahren durchgeführt werden kann.

Ein Komponentenfehlerbaum stellt dabei ein Bool'sches Modell dar, welches die Fehlerpropagation innerhalb einer Systemkomponente beschreibt. Der hier benutzte Begriff "Komponentenfehlerbäume" ist in seiner Bedeutung identisch mit dem Terminus "component fault tree" wie er insbesondere in Kaiser, B., Liggesmeyer, P., Mäckel, O.: "A new component concept for fault trees" (Proceedings of the 8th Australian Workshop on Safety Critical Sytems and Software, Vol. 33, pp. 37-46, SCS, 03 (2003)) etabliert ist (insoweit wird der Inhalt dieses vorgenannten Dokuments ausdrücklich in den Offenbarungsgehalt des vorliegenden Anmeldungstexts mit einbezogen). Die Aussagekraft solcher Komponentenfehlerbäume ist mit derjenigen Aussagekraft klassischer Fehlerbäume äquivalent.

Mittels des erfindungsgemäßen Verfahrens lassen sich Ansätze für Komponentenfehlerbäume auch dann entwickeln, wenn die einzelnen Komponenten im Systemmodell noch gar nicht näher hinsichtlich der Fehlerpropagation spezifiziert sind. Da sich das erfindungsgemäße Verfahren zudem leicht automatisieren lässt, können Komponenten des Systems sehr flexibel zu diesem System hinzugefügt werden oder von diesem entfernt werden, wobei infolge der Automatisierung die Sicherheitsanalyse des Systems leicht automatisch auf das geänderte System hin aktualisiert werden kann.

Insbesondere können Systemingenieure bei der Planung des Systems eine unmittelbare Rückmeldung über die Systemsicherheit, zumindest in der Art eines ersten Anhaltspunktes für ein detaillierteres Sicherheitsmodell, erhalten.

Ferner kann das erfindungsgemäße Verfahren als Startpunkt für eine entsprechende Spezifizierung der Komponente betrachtet werden. So können Sicherheitsingenieure den mit dem erfindungsgemäßen Verfahren modellierten Fehlerbaum als Grundlage heranziehen, um ein präziseres Modell für die Fehlerpropagation der Komponente zu entwickeln.

Die mit dem erfindungsgemäßen Verfahren mögliche enge Kopplung zwischen der Systemarchitektur des mehrkomponentigen Systems sowie dem dazugehörigen Sicherheitsmodell erlaubt eine zeitnahe Reaktion auf Umstände, welche etwa aus dem Sicherheitsmodell resultieren: Etwaige Systemänderungen können mit dem erfindungsgemäßen Verfahren zeitnah und flexibel begleitet werden. Insbesondere sind erfindungsgemäß "*Plug & Play*"-artige Lösungen bei sicherheitsrelevanten Systemen zur Laufzeit denkbar, wenn etwa neue Komponenten zu einem bereits bestehenden System hinzugefügt werden sollen, obwohl keine Modelle zur Fehlerpropagation hinsichtlich der neuen Komponente verfügbar sind. Gerade in cyber-physischen Systemen, bei welchen sich verschiedene eingebettete Systeme plötzlich zur Laufzeit miteinander austauschen müssen, lassen sich entsprechende Sicherheitsanforderungen mittels des erfindungsgemäßen Verfahrens einhalten.

Bevorzugt ist bei dem erfindungsgemäßen Verfahren der Komponentenfehlerbaum der Komponente mittels einer oder mehreren Eingangsschnittstelle/n der Komponente mit dem eingangsseitigen Komponentenfehlerbaum und/oder mittels einer oder mehreren Ausgangsschnittstelle/n der Komponente mit dem ausgangsseitigen Komponentenfehlerbaum verknüpft.

In einer vorteilhaften Weiterbildung werden bei dem erfindungsgemäßen Verfahren je Eingangsschnittstelle der Komponente die mit dieser Eingangsschnittstelle verknüpften Ausgangsfehlermodi des eingangsseitigen Komponentenfehlerbaums als Eingangsfehlermodi der Komponente mit dieser Eingangsschnittstelle verknüpft.

Bevorzugt werden bei dem erfindungsgemäßen Verfahren je Ausgangsschnittstelle die mit dieser Ausgangsschnittstelle verknüpften Eingangsfehlermodi des ausgangsseitigen Komponentenfehlerbaums als Ausgangsfehlermodi der Komponente mit dieser Ausgangsschnittstelle verknüpft.

In einer bevorzugten Weiterbildung des erfindungsgemäßen Verfahrens wird zu je einem Ausgangsfehlermodus der Komponente geprüft, ob zu diesem ein Eingangsfehlermodus der Komponente korrespondiert. Zweckmäßigerweise wird eine solche Prüfung für sämtliche Ausgangsfehlermodi der Komponente vorgenommen.

Zweckmäßig wird bei dem erfindungsgemäßen Verfahren dann, wenn zu einem Ausgangsfehlermodus ein Eingangsfehlermodus korrespondiert, der Ausgangsfehlermodus mit diesem korrespondierenden Eingangsfehlermodus verknüpft. Diese Art der Fehlerpropagation zwischen Eingangsfehlermodus und Ausgangsfehlermodus deckt typische in der Realität vorkommende Fälle bereits mithilfe eines einfachen und schematischen, leicht automatisierbaren Modells regelmäßig gut ab.

Bei dem erfindungsgemäßen Verfahren wird geeigneter Weise dann, wenn zu einem Ausgangsfehlermodus keiner der Eingangsfehlermodi korrespondiert, der Ausgangsfehlermodus mit sämtlichen Eingangsfehlermodi verknüpft. Auf diese Weise ist derjenige Fall, in welchem kein Anhaltspunkt für eine mögliche Fehlerpropagation vorliegt, möglichst konservativ abgedeckt. Auch diese Weiterbildung des erfindungsgemäßen Verfahrens bleibt leicht automatisierbar.

Das erfindungsgemäße Verfahren wie zuvor beschrieben wird in einer bevorzugten Weiterbildung für zwei oder mehr Komponenten des Systems durchgeführt.

Idealerweise umfassen bei dem erfindungsgemäßen Verfahren die Eingangsfehlermodi und/oder die Ausgangsfehlermodi ein oder mehrere Fehlermodi der folgenden, insbesondere abschließenden, Aufzählung: Omission-Fehler (Signale werden erwartet, aber nicht geliefert), Commission-Fehler (Signale werden geliefert, aber nicht erwartet), Too-low-Fehler (Signal ist in seiner Stärke zu niedrig), Too-high-Fehler (Signal ist in seiner Stärke zu hoch), False-Positive-Fehler (Es wird fälschlicherweise ein Signal registriert, obwohl keines anliegt), False-negative-Fehler (ein tatsächlich anliegendes Signal wird fälschlich nicht registriert), Service-Timing-Fehler, insbesondere Too-early-Fehler (Signal wird zu früh geliefert) oder Too-late-Fehler (Signal wird zu spät geliefert).

Das erfindungsgemäße Computerprogrammprodukt ist ausgebildet, als Eingangsdaten einen Fehlerbaum eines mehrkomponentigen Systems mit zumindest einer Komponente mit einem unvollständig modellierten Komponentenfehlerbaum entgegenzunehmen und ein Verfahren nach einem der vorstehenden Ansprüche zur Modellierung zumindest dieses Komponentenfehlerbaums durchzuführen und vorzugsweise bereitzustellen.

Bevorzugt ist das erfindungsgemäße Computerprogrammprodukt ausgebildet, ein Modell für zumindest diesen Komponentenfehlerbaum, vorzugsweise des gesamten Fehlerbaums des mehrkomponentigen Systems, auszugeben.

Bei dem erfindungsgemäßen Verfahren zur Entwicklung oder Anpassung eines technischen Systems wird das erfindungsgemäße Verfahren zur Modellierung eines Komponentenfehlerbaums für mindestens eine Komponente des Systems wie zuvor beschrieben herangezogen. Zweckmäßig wird da erfindungsgemäße Verfahren zur Entwicklung oder Anpassung eines mehrkomponentigen technischen Systems eingesetzt.

Auf diese Weise kann/können bei der Entwicklung und/oder bei der Anpassung des technischen Systems, insbesondere beim Systementwurf und/oder zeitnah und/oder mit der Entwicklung iterativ, eine Sicherheitsanalyse oder schrittweise angepasst mehrere Sicherheitsanalysen des technischen Systems durchgeführt werden.

Nachfolgend wird die Erfindung anhand eines in der Zeichnung dargestellten Ausführungsbeispiels näher erläutert.

Es zeigen:

Fig. 1 ein mehrere Komponenten umfassendes System mit einer Komponente mit einem unbekannten Fehlerbaum schematisch in einer Prinzipskizze sowie

Fig. 2 das mehrkomponentige System gem. Fig. 1 mit einem mittels des erfindungsgemäßen Verfahrens für die Komponente mit dem unbekannten Fehlerbaum modellierten Fehlerbaum schematisch in einer Prinzipskizze.

Ein Modell für den Komponentenfehlerbaum wird mittels des erfindungsgemäßen Verfahrens zur Modellierung eines Komponentenfehlerbaums für mindestens eine Komponente eines Systems wie nachfolgend beschrieben entwickelt:

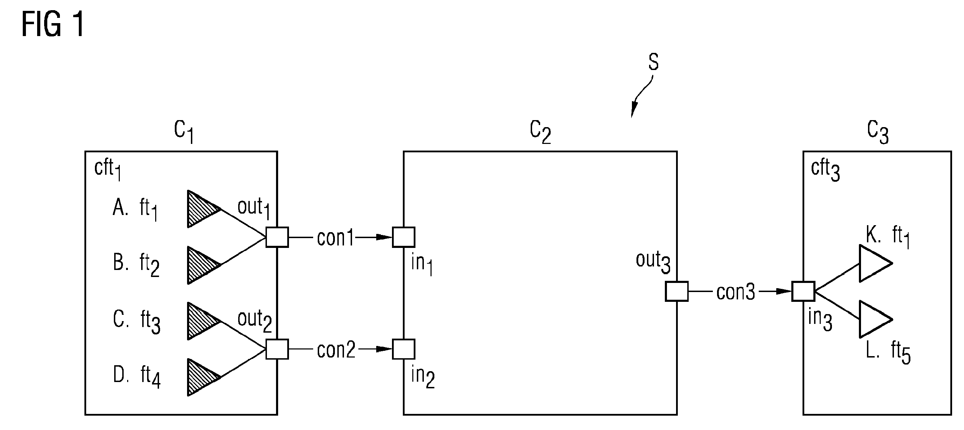

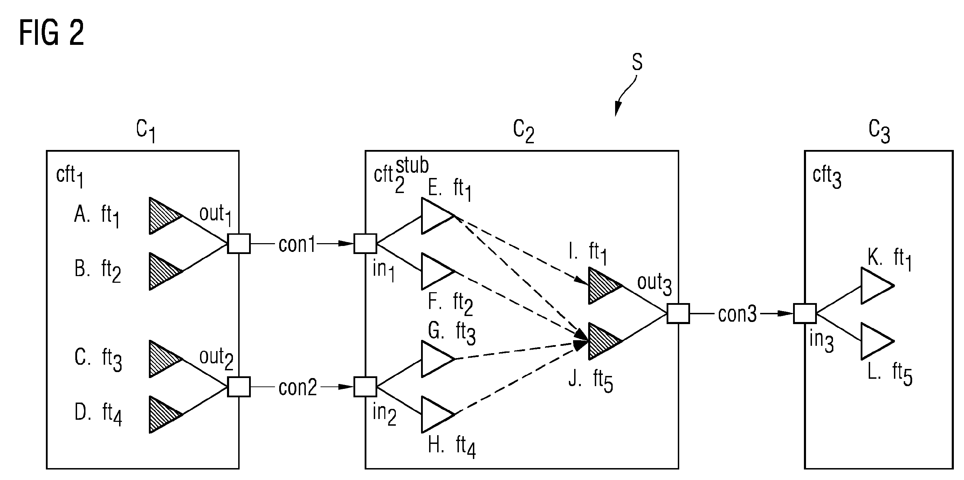

Das in Fig. 1 und 2 dargestellte System S besteht aus seiner Mehrzahl von Komponenten $C = \{c_1, ..., c_n\}$. Jede Komponente $c \in C$ weist einen Satz von Eingangsschnittstellen $IN(c) = \{in_1, ..., in_p\}$ sowie einen Satz von Ausgangsschnittstellen $OUT(c) = \{out_1, ..., out_q\}$ auf.

Der Informationsfluss zwischen einer Ausgangsschnittstelle einer ersten Komponente $c_1 \in C$ und einer Eingangsschnittstelle einer zweiten Komponente $c_2 \in C$ (erste und zweite Komponente sind nicht identisch, $c_1 \neq c_2$) erfolgt mittels eines Satzes von Verknüpfungen

$$CON = \left\{ \left( out_x, in_y \right) \middle| out_x \in OUT(c_1), in_y \in IN(c_2) \right\}.$$

Das Beispielsystem gem. Figur 1 ist demgemäß definiert durch den Satz von Komponenten

$$C = \{c_1, \ c_2, \ c_3\},$$

den Satz von Eingangsschnittstellen

$$IN(c_1) = \{\},$$

$$IN(c_2) = \{in_1, \ in_2\},$$

$$IN(c_3) = \{in_3\},$$

den Satz von Ausgangsschnittstellen

$$OUT(c_1) = \{out_1, out_2\},$$

$$\mathrm{OUT}(c_2) = \{\mathrm{out}_3\},$$

$$\mathrm{OUT}(c_3) = \{\} \ \texttt{sowie}$$

den Verknüpfungen zwischen den Komponenten $c_i$

$$\mathrm{CON} = \{(\mathrm{out}_1,\ \mathrm{in}_1),\ (\mathrm{out}_2,\ \mathrm{in}_2),\ (\mathrm{out}_3, \mathrm{in}_3)\}.$$

Wenn die Komponente des Systems $c_i \in$ C einen Komponentenfehlerbaum cft aufweist, dann ist CFT($c_i$) = cft mit cft $\neq 0$. Für eine Komponente $c_j \in$ C, die keinen Komponentenfehlerbaum aufweist, ist CFT($c_j$) = 0.

Im dargestellten Ausführungsbeispiel weisen lediglich die Komponenten $c_1$ und $c_3$ einen Komponentenfehlerbaum auf, während hingegen die Komponente $c_2$ keinen Komponentenfehlerbaum aufweist:

$$\mathrm{CFT}\ (c_1) = \mathrm{cft}_1\ \neq\ \emptyset$$

$$\mathrm{CFT}\ (c_2) = \emptyset$$

$$\mathrm{CFT}\ (c_3) = \mathrm{cft}_3\ \neq\ \emptyset.$$

Mittels des erfindungsgemäßen Verfahrens wird der Komponentenfehlerbaum dieser Komponente $c_2$ wie nachfolgend beschrieben angesetzt.

Jeder Komponentenfehlerbaum CFT($c_i$) $\neq 0$ einer Komponente $c_i \in C$ kann zum einen Eingangsfehlermodi IFM($\mathrm{in}_k$) = $\{\mathrm{ifm}_1, ..., \mathrm{ifm}_s\}$ aufweisen, welche zu einer Eingangsschnittstelle $\mathrm{in}_k \in$ IN ($c_i$) gehören, sowie Ausgangsfehlermodi OFM($\mathrm{out}_1$) = $\{\mathrm{ofm}_1, ..., \mathrm{ofm}_t\}$, welche zu einer Ausgangsschnittstelle $\mathrm{out}_1 \in$ OUT($c_i$) gehören.

Im in Fig. 1 gezeigten Beispiel sind die zu den Ein- und Ausgangsschnittstellen gehörenden Eingangs- und Ausgangsfehlermodi:

$$\mathrm{IFM}\ (\mathrm{in}_1) = \mathrm{IFM}\ (\mathrm{in}_2) = \{\}$$

$$\mathrm{IFM}\ (\mathrm{in}_3) = \{K, L\}$$

$$\mathrm{OFM}\ (\mathrm{out}_1) = \{A, B\}$$

$$\mathrm{OFM}\ (\mathrm{out}_2) = \{C, D\}$$

$$\mathrm{OFM}\ (\mathrm{out}_3) = \{\}$$

Um die Fehlermodi einer Komponente innerhalb des Komponenten- und Systemfehlerbaums einheitlich zu behandeln, wird jedem Eingangs- und Ausgangsfehlermodus ein Fehlertyp fty zugeordnet. Die unterschiedlichen Fehlertypen sowie die zwischen diesen bestehenden Beziehungen sind in einem Fehlertypensystem $T$ (s. dazu insbesondere McDermid, J., Pumfrey, D.: A development of hazard analysis to aid software design, Proceedings oft the Ninth Annual Conference on Computer Assurance Safety, Reliability, Fault Tolerance, Concurrency and

Real Time, Security (COMPASS ,94), pp. 17-25) im Einzelnen aufgelistet:

$$FTY\,(fm) = fty, \texttt{ wobei } fm \in \{ifm_1, \ldots, ifm_a, \; ofm_1, \ldots, ofm_b\}; \; fty \in T. \qquad (17)$$

Im gezeigten Beispiel sind die auftretenden Fehlertypen der Ein- und Ausgangsfehlermodi die explizit benannten Fehlertypen $ft_1$, $ft_2$, $ft_3$, $ft_4$, $ft_5$:

$$FTY\,(A) = FTY\,(K) \;=\; \texttt{ft}_1 \;=\; \texttt{omission}$$

$$FTY\,(B) \;=\; \texttt{ft}_2 \;=\; \texttt{commission}$$

$$FTY\,(C) \;=\; \texttt{ft}_3 \;=\; \texttt{too low}$$

$$FTY\,(D) \;=\; \texttt{ft}_4 \;=\; \texttt{too high}$$

$$FTY\,(L) \;=\; \texttt{ft}_5 \;=\; \texttt{false positive.}$$

Wenn eine Komponente $c_i \in C$ keinen Komponentenfehlerbaum aufweist ($CFT(c_i)$ = ø), jedoch jeweils alle diejenigen Komponenten $\{c'_1, \ldots, c'_u\}$ = $C' \subseteq C$, an welchen die betrachtete Komponente des Sytems mit ihrer Eingangsseite, d.h. signalstromaufwärts, angebunden ist, sowie alle diejenigen Komponenten $\{c''_1, \ldots, c''_v\} \in C'' \subseteq C$, welche die betrachtete Komponente des Systems $c_i$ ausgangsseitig, d.h. signalstromabwärts, speist, einen Komponentenfehlerbaum $CFT(c_j)$ = $cft_j \neq$ ø, $c'_1, \ldots, c'_u \; \cup \; c''_1, \ldots, c''_v$) aufweisen, dann ist es möglich, einen Komponentenstub fehlerbaumansatz cft für die betrachtete Komponente $c_i$ zu entwickeln mit

$$CFT\,(C_i) \;=\; CFT\,(c_i) = \; cft^{stub}_{c_i} \;\neq\; \emptyset,$$ welche auf der bislang verfügbaren Information beruht. Die Modellierung für einen solchen Ansatz cft$^{stub}$ geschieht dabei wie folgt:

Zunächst wird für jeden Eingangsfehlermodus, der zu einer Eingangsschnittstelle die mit einer Ausgangsschnittstelle $out_x \in OUT(c_i)$ der betrachteten Komponente $c_i \in C$ verknüpft ist, ein Ausgangsfehlermodus für diese Ausgangsschnittstelle angesetzt in dem Ansatz für den Komponentenfehlerbaum $cft^{stub}_{c_i}$ mit demselben Fehlertyp, wie er dem jeweiligen Eingangsfehlermodus entspricht:

$$\forall \, in_y \, \in IN(c'') : \forall \, ifm_k \, \in IFM\big(in_y\big) :$$
$$\rightarrow ofm \, \in OFM\,(out_x), \; FTY\,(ofm) = \; FTY\,(ifm_k)$$
$$\texttt{mit} \, \big(out_x, in_y\big) \in OUT(c_i), c'' \in C''.$$

Ferner wird für jeden Ausgangsfehlermodus, welcher zu einer Ausgangsschnittstelle gehört, die mit einer Eingangsschnittstelle $in_y \in IN(c_i)$ of $c_i \in C$ verknüpft ist, ein Eingangsfehlermodus für diese Eingangsschnittstelle angesetzt in den Ansatz für den Komponentenfehlerbaum $cft^{stub}_{c_i}$ mit demselben Fehlertyp, wie er dem jeweiligen Ausgangsfehlermodus entspricht:

$$\forall \, out_y \, \in OUT(c') : \forall \, ofm_l \, \in OFM(out_x) :$$
$$\rightarrow ifm \, \in IFM\big(in_y\big), \; FTY\,(ifm) = \; FTY\,(ofm_l)$$
$$\texttt{mit} \, \big(out_x, in_y\big) \in CON, \; in_y \, \in IN(c_i), \; c' \in C'.$$

Nachfolgend werden die angesetzten Eingangs- und Ausgangsfehlermodi innerhalb der betrachteten Komponente $c_i \in C$ basierend auf dem zugehörenden Fehlertyp miteinander verbunden: Wenn der Ausgangsfehlermodus denselben Fehlertyp aufweist wie einer oder mehrere Eingangsfehlermodi, so wird eine Verknüpfung zwischen diesem Ausgangsfehlermodus und diesem Eingangsfehlermodus angesetzt:

$$\forall \, \text{out}_i \in \text{OUT}(c), \text{in}_j \in \text{IN}(c) : \forall \, \text{ofm}_k \in \text{OFM}(\text{out}_i), \text{ifm}_l \in \text{IFM}(\text{in}_j) :$$
$$\rightarrow \{(\text{ifm}_l, \text{ofm}_k) \,|\, \text{FTY}(\text{ofm}_k) = \text{FTY}(\text{ifm}_l)\}.$$

In dem Falle, dass kein Eingangsfehlermodus in seine Fehlertyp einem Ausgangsfehlermodus gleicht ($\forall \, \text{in}_k \in \text{IN}(c) : \forall \, \text{ifm}_j \in \text{OFM}(\text{in}_k) : \text{FTY}(\text{ofm}_i) \neq \text{FTY}(\text{ifm}_j)$), wird vorsichtshalber als "Worst-Case-Scenario" angesetzt, dass die Fehlerpropagation so umfassend als denkbar erfolgt: In diesem Ansatz werden, falls irgendein Eingangsfehlermodus der betrachteten Komponente $c_i \in$ C aktiv ist, sämtliche Ausgangsfehlermodi als aktiv angenomen:

$$\forall \, \text{out}_i \in \text{OUT}(c), in_j \in \text{IN}(c) : \forall \, \text{ofm}_k \in \text{OFM}(\text{out}_i) :$$
$$\rightarrow \{(\text{ifm}_l, \text{ofm}_k) \,|\, \text{ifm}_l \in \text{IFM}(\text{in}_j)\}.$$

Im in Figur 2 gezeigten Ausführungsbeispiel kann ein Ansatz für den Komponentenfehlerbaum mit den folgenden Ein- und Ausgangsfehlermodi für die Komponente $c_2$ angesetzt werden $(\text{CFT}(C_2) = \text{cft}_{c_i}^{stub})$ :

$$\text{IFM}(\text{in}_1) = \{E, F\}$$

$$\text{IFM}(\text{in}_2) = \{G, H\}$$

$$\text{OFM}(\text{out}_3) = \{I, J\}$$

$$\text{FTY}(E) = \text{FTY}(I) = \text{omission}$$

$$\text{FTY}(F) = \text{commission}$$

$$\text{FTY}(G) = \text{too low}$$

$$\text{FTY}(H) = \text{too high}$$

$$\text{FTY}(J) = \text{false positive.}$$

Grundsätzlich können in weiteren, nicht eigens dargestellten Ausführungsbeispielen auch alternativ oder zusätzlich die Ein- und Ausgangsfehlermodi des Fehlertyps "False-Negative-Fehler", "Too-early-Fehler" oder "Too-late-Fehler" vorliegen.

Zudem kann der nachfolgend angegebene Satz von Verknüpfungen angesetzt werden:

{(E,I)}
{(F,J), (F,J), (G,J), (N,J)}

Der hieraus sich ergebende Ansatz für den Komponentenfehlerbaum $\mathrm{cft}_{c_i}^{\mathrm{stub}}$ für die Komponente $c_2$ (stellenweise auch kurz als Komponentenfehlerbaum $\mathrm{cft}_2^{\mathrm{stub}}$ bezeichnet) ist in Fig. 2 dargestellt.

Abhängig vom jeweiligen Anwendungsfall und Systemkontext können allerdings auch Situationen auftreten, in welchen der Fehlertyp sich in einer Komponente ändert, beispielsweise ist es denkbar, dass ein verzögertes Signal ein fehlerhaftes Ausgangssignal bedingt. Solche Fälle können beispielsweise manuell berücksichtigt werden, etwa durch eine entsprechende Ergänzung des erfindungsgemäß erhaltenen Ansatzes für den Komponentenfehlerbaum.

Das vorstehend erläuterte Verfahren wird in einem Ausführungsbeispiel des erfindungsgemäßen Computerprogrammprodukts von diesem Computerprogrammprodukt durchgeführt, welches ausgebildet ist, als Eingangsdaten einen Fehlerbaum eines mehrkomponentigen Systems mit zumindest einer Komponente mit einem unvollständig modellierten Komponentenfehlerbaum in an sich bekannter Weise mittels einer Benutzerschnittstelle entgegenzunehmen und ein Verfahren nach einem der vorstehenden Ansprüche zur Modellierung zumindest dieses Komponentenfehlerbaums durchzuführen und vorzugsweise bereitzustellen.

Das Computerprogrammprodukt ist in diesem Ausführungsbeispiel ausgebildet, ein Modell für zumindest diesen Komponentenfehlerbaum, vorliegend darüber hinaus einen vervollständigten Fehlerbaum des gesamten mehrkomponentigen Systems, über eine Benutzerschnittstelle wie an sich bekannt auszugeben.

Erfindungsgemäß wird mithilfe des vorhergehend beschriebenen Verafahrens zur Modellierung des Komponentenfehlerbaums des technischen Systems das technische System selbst in der Art eines erfindungsgemäßen Verfahrens zur Entwicklung des Systems weiterentwickelt. Zweckmäßig wird anhand des Komponentenfehlerbaums eine Sicherheitsanalyse des technischen Systems durchgeführt. Insbesondere wird iterativ das System komponentenweise erfindungsgemäß weiterentwickelt und jeweils begleitend ein Komponentenfehlerbaum mittels des erfindungsgemäßen Verfahrens modelliert, welcher jeweils zur Sicherheitsanalyse herangezogen wird. Die Sicherheitsanalyse wiederum wird bei der weiteren erfindungsgemäßen Entwicklung des Systems berücksichtigt.

**Patentansprüche**

1. Verfahren zur Modellierung eines Komponentenfehlerbaums $\left(\mathrm{cft}_2^{\mathrm{stub}}\right)$ für mindestens eine Komponente ($c_2$) eines, insbesondere cyber-physischen, Systems, bei welchem der Komponentenfehlerbaum $\left(\mathrm{cft}_2^{\mathrm{stub}}\right)$ signalflussaufwärts mit einem bekannten eingangsseitigen ($\mathrm{cft}_1$) sowie signalflussabwärts mit einem bekannten ausgangsseitigen Komponentenfehlerbaum ($\mathrm{cft}_3$) verknüpft wird, wobei - ein oder mehrere Ausgangsfehlermodi (A, B, C, D) des eingangsseitigen Komponentenfehlerbaums als Eingangsfehlermodi (E, F, G, H) der Komponente ($c_2$) herangezogen werden sowie - ein oder mehrere Eingangsfehlermodi (K, L) des ausgangsseitigen Komponentenfehlerbaums als Ausgangsfehlermodi (I, J) der Komponente ($c_2$) herangezogen werden.

2. Verfahren nach Anspruch 1, bei welchem der Komponentenfehlerbaum $\left(\mathrm{cft}_2^{\mathrm{stub}}\right)$ der Komponente ($c_2$) mittels einer oder mehreren Eingangsschnittstelle/n ($\mathrm{in}_1$; $\mathrm{in}_2$) der Komponente ($c_2$) mit dem eingangsseitigen Komponentenfehlerbaum ($\mathrm{cft}_1$) und/oder mittels einer oder mehreren Ausgangsschnittstelle/n ($\mathrm{out}_3$) der Komponente ($c_2$) mit dem ausgangsseitigen Komponentenfehlerbaum ($\mathrm{cft}_3$) verknüpft ist.

3. Verfahren, nach dem vorhergehenden Anspruch, bei welchem je Eingangsschnittstelle ($\mathrm{in}_1$, $\mathrm{in}_2$) der Komponente ($c_2$) die mit dieser verknüpften Ausgangsfehlermodi (A, B, C, D) des eingangsseitigen Komponentenfehlerbaums ($\mathrm{cft}_1$) als Eingangsfehlermodi (E, F, G, H) der Komponente ($c_2$) mit dieser Eingangsschnittstelle ($\mathrm{in}_1$, $\mathrm{in}_2$) verknüpft werden.

4. Verfahren nach einem der beiden vorhergehenden Ansprüche, bei welchem je Ausgangsschnittstelle ($\mathrm{out}_3$) der Komponente ($c_2$) die mit dieser verknüpften Eingangsfehlermodi (K, L) des ausgangsseitigen Komponentenfehlerbaums ($\mathrm{cft}_3$) als Ausgangsfehlermodi (I, J) der Komponente ($c_2$) mit dieser Ausgangsschnittstelle ($\mathrm{out}_3$) verknüpft werden.

5. Verfahren nach einem der vorhergehenden Ansprüche, bei welchem zu je einem Ausgangsfehlermodus (I, J) der Komponente ($c_2$) geprüft wird, ob zu diesem ein Eingangsfehlermodus (E, F, G, H) der Komponente korrespondiert.

**6.** Verfahren nach dem vorhergehenden Anspruch, bei welchem dann, wenn zu einem Ausgangsfehlermodus (I) ein Eingangsfehlermodus (E) korrespondiert, der Ausgangsfehlermodus (I) mit diesem korrespondierenden Eingangsfehlermodus (E) verknüpft wird.

**7.** Verfahren nach einem der beiden vorhergehenden Ansprüche, bei welchem dann, wenn zu einem Ausgangsfehlermodus (J) keiner der Eingangsfehlermodi (E, F, G, H) korrespondiert, der Ausgangsfehlermodus (J) mit sämtlichen Eingangsfehlermodi (E, F, G, H) verknüpft wird.

**8.** Verfahren nach einem der vorhergehenden Ansprüche, welches für zwei oder mehr Komponenten des Systems (S) durchgeführt wird.

**9.** Verfahren nach einem der vorhergehenden Ansprüche, bei welchem die Eingangsfehlermodi (E, F, G, H, K, L) und/oder die Ausgangsfehlermodi (A, B, C, D, I, J) ein oder mehrere Fehlermodi der folgenden, insbesondere abschließenden, Aufzählung umfassen: Omission-Fehler (A, K, E, I), Commission-Fehler (F), Too-Early-Fehler, Too-Late-Fehler, Too-low-Fehler (C, G), Too-high-Fehler (D, H), False-Positive-Fehler (J, L), False-Negative-Fehler, Too-early-Fehler, Too-late-Fehler.

**10.** Computerprogrammprodukt, welches ausgebildet ist, als Eingangsdaten einen Fehlerbaum ($cft_1$, $cft_3$) eines mehrkomponentigen Systems (S) mit zumindest einer Komponente ($c_2$) mit einem unvollständig modellierten Komponentenfehlerbaum entgegenzunehmen und ein Verfahren nach einem der vorstehenden Ansprüche zur Modellierung zumindest dieses Komponentenfehlerbaums $\left( cft_2^{stub} \right)$ durchzuführen und vorzugsweise bereitzustellen.

**11.** Computerprogrammprodukt nach einem der vorhergehenden Ansprüche, welches ausgebildet ist, ein Modell für zumindest diesen Komponentenfehlerbaum $\left( cft_2^{stub} \right)$, vorzugsweise des gesamten mehrkomponentigen Systems (S), auszugeben.

**12.** Verfahren zur Entwicklung und/oder Anpassung eines technischen Systems (S), bei welchem ein Verfahren zur Modellierung eines Komponentenfehlerbaums für mindestens eine Komponente des Systems (S) nach einem der Ansprüche 1 bis 9 und/oder ein Computerprogrammprodukt nach Anspruch 10 oder 11 herangezogen wird, wobei vorzugsweise anhand des Komponentenfehlerbaums eine Sicherheitsanalyse des Systems (S) durchgeführt wird.

FIG 1

EP 3 121 674 A1

# FIG 2

EP 3 121 674 A1

Europäisches
Patentamt

European
Patent Office

Office européen
des brevets

**EUROPÄISCHER RECHERCHENBERICHT**

Nummer der Anmeldung

EP 16 18 0112

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HOFIG KAI ET AL: "Automated failure propagation using inner port dependency traces", 2015 11TH INTERNATIONAL ACM SIGSOFT CONFERENCE ON QUALITY OF SOFTWARE ARCHITECTURES (QOSA), ACM, 4. Mai 2015 (2015-05-04), Seiten 123-128, XP032891022, DOI: 10.1145/2737182.2737191 [gefunden am 2016-04-11] * das ganze Dokument * ----- | 1-12 | INV. G05B23/02 |
| A | Bernhard Kaiser ET AL: "A New Component Concept for Fault Trees", 8th Australian Workshop on Safety Critical Systems and Software (SCS'03),, 1. Januar 2003 (2003-01-01), Seiten 37-46, XP055206337, Canberra Gefunden im Internet: URL:http://essarel.de/publications/klm03.pdf [gefunden am 2015-08-05] * das ganze Dokument * ----- | 1-12 | |
| | | | RECHERCHIERTE SACHGEBIETE (IPC) |
| | | | G05B |

Der vorliegende Recherchenbericht wurde für alle Patentansprüche erstellt

| Recherchenort | Abschlußdatum der Recherche | Prüfer |
|---|---|---|
| Den Haag | 30. November 2016 | Utz, Tilman |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**IN DER BESCHREIBUNG AUFGEFÜHRTE DOKUMENTE**

**In der Beschreibung aufgeführte Nicht-Patentliteratur**

- A new component concept for fault trees. **KAISER, B. ; LIGGESMEYER, P. ; MÄCKEL, O.** Proceedings of the 8th Australian Workshop on Safety Critical Sytems and Software. SCS, 2003, vol. 33, 37-46

- A DEVELOPMENT OF HAZARD ANALYSIS TO AID SOFTWARE DESIGN. **MCDERMID, J., PUMFREY, D.** PROCEEDING OFT THE NINTH ANNUAL CONFERENCE ON COMPUTER ASSURANCE. COMPASS, 17-25